Europäisches Patentamt

European Patent Office

Office européen des brevets

(11) Veröffentlichungsnummer: **0 217 232 B1**

(12) **EUROPÄISCHE PATENTSCHRIFT**

(45) Veröffentlichungstag der Patentschrift:
28.02.90

(21) Anmeldenummer: 86112869.2

(22) Anmeldetag: 17.09.86

(51) Int. Cl.⁴: **G06F 12/04, G06F 12/08**

(54) Schaltungsanordnung zur Generierung von Splitting-Adressen.

(30) Priorität: 30.09.85 DE 3534889

(43) Veröffentlichungstag der Anmeldung:
08.04.87 Patentblatt 87/15

(45) Bekanntmachung des Hinweises auf die Patenterteilung:
28.02.90 Patentblatt 90/9

(84) Benannte Vertragsstaaten:
AT BE CH DE FR GB IT LI NL SE

(56) Entgegenhaltungen:
EP-A- 0 032 136
FR-A- 2 144 308
US-A- 3 602 896
US-A- 4 130 880

IBM TECHNICAL DISCLOSURE BULLETIN, Band 25,
Nr. 7A, Dezember 1982, Seiten 3539-3542, New York, US;
A.Y. NGAI et al.: "Boundary crossing within a cache
line"

(73) Patentinhaber: Siemens Aktiengesellschaft,
Wittelsbacherplatz 2, D-8000 München 2(DE)

(72) Erfinder: Feissel, Wolfgang, Dipl.-Phys.,
Gräfelfingerstrasse 24, D-8000 München(DE)
Erfinder: Nussbächer, Hans Klaus, Dipl.-Ing.,
Strassbergerstrasse 12, D-8000 München 40(DE)

ACTORUM AG

## Beschreibung

Die Erfindung betrifft eine Schaltungsanordnung zur Generierung von Splitting-Adressen nach dem Oberbegriff des Patentanspruchs 1.

In Zentraleinheiten großer Datenverarbeitungsanlagen stellen die Cache-Speicher eine wesentliche Funktionseinheit zur Beschleunigung der Speicherzugriffe der Zentralprozessoren dar. Geschwindigkeitsunterstützenden Maßnahmen innerhalb des Cache-Speichers kommt deshalb eine große Bedeutung zu.

Eine den Maschinenzyklus wesentlich beeinflussende Größe stellt der Lesezyklus im Cache dar. Zur Minimierung der für einen Lesezyklus erforderlichen Laufzeit kommen deshalb neben dem Einsatz möglichst schneller Speicherbausteine auch Schaltungskomplexe in Betracht, die zum Beispiel der Adressierung dieser Bausteine oder der Lesedatenverarbeitung dienen.

Ein Cache kann bekanntlich in ein oder mehrere Datenbänke gegliedert sein, die aus Speicherbausteinen, zum Beispiel RAM-Bausteinen gleicher Größe zusammengesetzt sind. Die maximale Leseausbeute wird dabei durch die Breite einer Datenbank bestimmt, die zum Beispiel 16 Byte = zwei Doppelworte beträgt. Diese maximale Leseausbeute ist dann erreichbar, wenn der Adressenzeiger auf das erste Byte innerhalb einer Zeile, das heißt auf den Zeilenanfang zeigt.

Findet dagegen ein Zugriff zu einer Datenbank an einer von der Datenzeilengrenze abweichenden Adresse innerhalb einer Datenzeile statt, so entsprechen die gültigen Daten, zum Beispiel bei Linksausrichtung, nur denjenigen, die in konsekutiver aufsteigener Folge zwischen dem Adressenzeiger und der Zeilengrenze liegen. Bei einem Zugriff werden deshalb im Vergleich zur Datenmenge einer vollen Speicherzeile entsprechend weniger Daten erfaßt. Da aber die Anzahl der Zugriffe zu den Datenbänken einen unmittelbaren Einfluß auf die Maschinenleistung hat, ist man bestrebt, diese Zugriff auf ein notwendiges Mindestmaß zu beschränken.

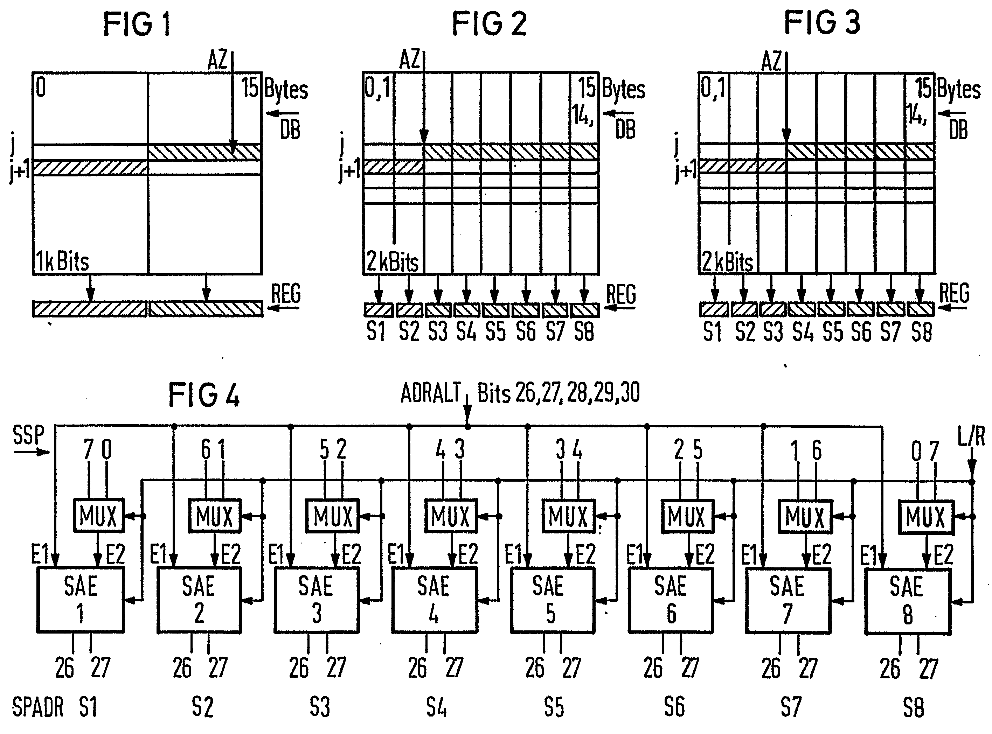

Das sogenannte Splitting-Verfahren bietet nun die Möglichkeit, mit einem Zugriff zur Datenbank, Daten entsprechend der Gesamtbreite einer Cache-Zeile auch dann auszulesen, wenn die Daten in zwei konsekutiven Zeilen liegen. Ein Beispiel für einen gleichzeitigen Zugriff auf zwei aufeinanderfolgenden Zeilen ist in FIG 1 dargestellt. Bei diesem Beispiel ist eine zwei Doppelworte = 16 Byte breite Datenbank DB in zwei Hälften unterteilt, so daß eine Adressierung an der Doppelwortgrenze möglich ist. Erfolgt nun eine Adressierung innerhalb des zweiten Doppelwortes, so wird - bei links ausgerichteten Daten - zum einen das adressierte Doppelwort in der Zeile j angesprochen und zum anderen gleichzeitig die Adresse für das folgende Doppelwort in der Zeile j + 1 zur Verfügung gestellt. Die mit einem einzigen Zugriff ausgelesenen Daten, die in der Zeichnung durch Schraffur gekennzeichnet sind, werden nun in ein Eingangsregister REG einer nachfolgenden Funktionseinheit, zum Beispiel Byteausrichter, übernommen.

Im Falle einer Zweiteilung einer Datenbank ist die Generierung der Splitting-Adressen noch relativ einfach. Die entsprechende Hardware-Realisierung besteht zum Beispiel aus einer kombinatorischen Logik und ist insgesamt noch gut überschaubar. Wird jedoch die Datenbankunterteilung erhöht, zum Beispiel von zwei auf acht Sektionen für Lesen an Halbwortgrenze, so führt das bisher gebräuchliche Verfahren - in kombinatorischer Logik realisiert - zu einer unübersichtlichen und für jede der acht Sektionen völlig unterschiedlichen Schaltungsanordnung mit entsprechend hohen Laufzeiten.

Aus der US-Patentschrift 3.602.896 ist bereits eine Lösung für einen dreidimensionalen Kernspeicher bekannt, bei dem abhängig von der den Beginn des jeweils anzusteuernden Datenwortes anzeigenden Byteadresse die einzelnen X- und Y-Auswahlleitungen des Kernspeichers für die einzelnen Bytes über logische Verknüpfungsschaltungen in der jeweils gewünschten Kombination wirksam schaltbar sind, so daß bei Abweichung von der Datenwortgrenze des Kernspeichers jeweils mit einem Speicherzyklus die ein Datenwort bildende Anzahl von aufeinanderfolgenden Bytes ausgewählt wird, auch wenn diese zwei unterschiedlichen aufeinanderfolgenden Speicheradressen zugeordnet sind. Dabei werden die mit der Byteadresse über einen Dekoder auswählbaren individuellen Byteleitungen als Bündel jeweils über den einzelnen Datenwortadressenleitungen individuell zugeordnete Gruppen von UND-Gliedern geführt, deren Ausgänge dann jeweils mit der zugehörigen Datenwortadressenleitung des jeweiligen Bytes im Kernspeicher über ODER-Glieder gebündelt verbunden sind, wenn die einzelnen Byteabschnitte jeweils getrennt angesteuert werden.

Da dieses Verknüpfungsprinzip bei der üblichen X/Y-Adressierung von dreidimensionalen Kernspeichern sowohl für die X- als auch die Y-Adressenleitungen anzuwenden ist, ergibt sich ein beträchtlicher Verknüpfungs- und insbesondere Verdrahtungsaufwand. Um letzteren zu vermindern, werden daher die einzelnen X- und Y-Adressenleitungen für die einzelnen Byteabschnitte des Kernspeichers jeweils in der gewünschten Kombination über zusätzliche bidirektionale Gattergruppen in Reihe geschaltet und dadurch individuelle Ansteuerpunkte für die einzelnen Reihenschaltungen geschaffen, an die dann die zugehörigen Byteleitungen angeschlossen sind. Aber auch der hierfür benötigte Aufwand ist noch beträchtlich und die Verdrahtung recht unübersichtlich, insbesondere wenn die Anzahl der Bytes oder Sektionen innerhalb eines mit einer Adresse ansteuerbaren Speicherabschnittes ansteigt.

Der vorliegenden Erfindung liegt deshalb die Aufgabe zugrunde, eine Schaltung zur Generierung von Splitting-Adressen mit wahlweise möglicher Links- oder Rechtsausrichtung anzugeben, die auch bei einer feineren Unterteilung der Datenbänke mit der Möglichkeit der Adressierung an der Wort-, Halbwort- oder Bytegrenze einen einfachen Aufbau mit dementsprechend kurzen Laufzeiten und verhältnismäßig geringem Aufwand ermöglicht.

Die Lösung dieser Aufgabe ergibt sich erfindungsgemäß durch die kennzeichnenden Merkmale des Patentanspruchs 1. Der Vorteil dieser Schaltung besteht darin, daß sich der für jede Sektion erforderliche Aufwand auf eine einfache Addition bzw. Subtraktion zweier Binärwerte reduziert.

Vorteilhafte Weiterbildungen der Erfindung sind in den Unteransprüchen angegeben.

Im folgenden wird ein Ausführungsbeispiel der Erfindung anhand der Zeichnung näher erläutert. Dabei zeigen

FIG 2 einen Ausschnitt aus einer zwei doppelwort-breiten Speicherbank mit einem Datenblock, dessen links ausgerichtete Daten an der Halbwortgrenze adressiert sind,

FIG 3 die Speicherbank gemäß FIG 1 mit einem Datenblock für rechts ausgerichtete Speicherdaten, die ebenfalls an der Halbwortgrenze adressiert sind,

FIG 4 eine Schaltungsanordnung gemäß der Erfindung zur Generierung von Splittingadressen.

Bei dem nachfolgend beschriebenen Ausführungsbeispiel wird von einem 2K Byte-Cache ausgegangen, bestehend aus zwei 2RAM-Speichern zu je 1 K × 4 Bit, das heißt einer Tiefe von 1 KByte und einer Breite von 4 Bit. Wegen der geforderten Tiefe von 2 KByte werden 2 RAM-Bausteine übereinander gestellt, wobei jeweils einer der korrespondierenden Ausgänge durchgeschaltet wird. Zur Adressierung dieses 2KByte großen Speichers sind insgesamt 11 Adreßbits erforderlich. Ausgehend von einer 32Bit-Adresse sind dies die Bits 17 bis 27, wobei mit den Bits 17 bis 25 ein 64Byte großer Datenblock mit vier Zeilen zu je 16 Byte = zwei Doppelworte adressiert wird. Für die Zeilenadressierung eines Datenblockes sind dann weitere zwei Bits, nämlich die Bits 26 und 27 erforderlich. Diese Zeilenadreßbits spielen bei der Generierung der Splittingadressen eine entscheidende Rolle. Innerhalb einer Zeile werden für die Adressierung an der Doppelwort-Wort-, Halbwort- und Byte-Grenze zusätzlich noch die Bits 28, 29, 30 und 31 benötigt. Im Beispiel nach FIG 2 ist eine Adressierung an der Halbwortgrenze vorgesehen, so daß hier das Adreßbit 31 praktisch keine Rolle spielt. Allgemein werden für eine in $2^n$ Sektionen unterteilte Speicherzeile n Bits und für einen aus $2^m$ Zeilen bestehenden Datenblock insgesamt $z = m + n$ Adreßbits benötigt. Bei einem Datenblock mit 64 Byte, aufgeteilt in $4 = 2^2 = 2^m$ Zeilen und $8 = 2^3$ Sektionen sind dies insgesamt $z = 2 + 3 = 5$ Bitstellen, nämlich die Bitstellen 26 bis 30.

Für einen Datenblock mit linksbündiger Adressierung sind in der nachstehenden Tabelle I für insgesamt 32 mögliche Adressen die Adressenbits der alten Adresse ADRALT und die für jede Sektion innerhalb einer Speicherzeile in Betracht kommenden Splitting-Adressenbits, das heißt die m = 2 Zeilenadreßbits 26, 27 angegeben.

TABELLE I

| ADRALT | | | | | Splitting-Adressenbits für Sektion Si | | | | | | | | | | | |
|---|---|---|---|---|---|---|---|---|---|---|---|---|---|---|---|---|
| | | | | | S1 | | S2 | | S3 | | S4 | | S5 .... | | S8 | |
| 26 | 27 | 28 | 29 | 30 | 26 | 27 | 26 | 27 | 26 | 27 | 26 | 27 | 26 | 27 | 26 | 27 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 1 | 0 | 1 | 0 | 0 | 0 | 0 | 0 | 0 | 0 | 0 | 0 | 0 |
| 0 | 0 | 0 | 1 | 0 | 0 | 1 | 0 | 1 | 0 | 0 | 0 | 0 | 0 | 0 | 0 | 0 |
| 0 | 0 | 0 | 1 | 1 | 0 | 1 | 0 | 1 | 0 | 1 | 0 | 0 | 0 | 0 | 0 | 0 |
| 0 | 0 | 1 | 0 | 0 | 0 | 1 | 0 | 1 | 0 | 1 | 0 | 1 | 0 | 0 | 0 | 0 |
| • | | | | | | | | | | | | | | | | |
| 1 | 0 | 1 | 1 | 1 | 1 | 1 | 1 | 1 | 1 | 1 | 1 | 1 | 1 | 1 | 1 | 0 |
| 1 | 1 | 0 | 0 | 0 | 1 | 1 | 1 | 1 | 1 | 1 | 1 | 1 | 1 | 1 | 1 | 1 |
| 1 | 1 | 0 | 0 | 1 | x | x | 1 | 1 | 1 | 1 | 1 | 1 | 1 | 1 | 1 | 1 |
| 1 | 1 | 0 | 1 | 0 | x | x | x | x | 1 | 1 | 1 | 1 | 1 | 1 | 1 | 1 |
| 1 | 1 | 0 | 1 | 1 | x | x | x | x | x | x | 1 | 1 | 1 | 1 | 1 | 1 |
| 1 | 1 | 1 | 0 | 0 | x | x | x | x | x | x | x | x | 1 | 1 | 1 | 1 |
| 1 | 1 | 1 | 0 | 1 | x | x | x | x | x | x | x | x | x | x | 1 | 1 |
| 1 | 1 | 1 | 1 | 0 | x | x | x | x | x | x | x | x | x | x | 1 | 1 |
| 1 | 1 | 1 | 1 | 1 | x | x | x | x | x | x | x | x | x | x | 1 | 1 |

In dieser Tabelle I ist die für das Beispiel gemäß FIG 2 maßgebliche alte Adresse ADRALT ≙ 000010 durch eine Umrandung besonders markiert, wobei die für eine Byte-Adressierung erforderliche Bitstelle 31 wegen der im vorliegenden Fall vorgesehenen Adressierung an der Halbwortgrenze wegfallen kann. Neben der alten Adresse ADRALT, die auf den Sektor S3 in Zeile j zeigt, (siehe den Adressenzeiger AZ), sind die für jede Sektion S1...S8 maßgeblichen Splitting-Adressenbits SPADR S1.26 u.27....SPADR S8.26 u.27 angegeben. Dabei zeigt sich, daß die Splitting-Adressen-bits SPADR für die Sektionen S3...S8 in Zeile j mit den Zeilenadreßbits 26, 27 ≙ 00 der alten Adresse ADRALT ≙ 00010 übereinstimmen, während bei den Sektionen S1 und S2 eine um den Binärwert "1" erhöhte Zeilenadresse für die nächsthöhere Zeile j + 1 in Form der Splitting-Adressbits SPADR ≙ 01 angegeben wird.

In FIG 3 und der zugehörigen Tabelle II sind die Verhältnisse für einen Datenblock mit rechtsbündiger Adressierung in analoger Weise dargestellt. Aufgrund der Adressierung in Sektion S3 wird in der Zeile j + 1 auf die Daten der Sektion S3, S2, S1 und in der Zeile j auf die Daten der Sektionen S8, S7, S6 und S4 zugegriffen. In der nachfolgenden Tabelle II ist die für das Beispiel gemäß FIG 3 maßgebliche alte Adresse ADRALT ≙ 01010 durch eine Umrandung besonders markiert. Aus den neben der alten Adresse ADRALT ≙ 01010 stehenden Splitting-Adressen ergibt sich demzufolge, daß die Splitting-Adressenbits SPADR für die Sektionen S1, S2 und S3 (Zeile j + 1) mit den Zeilenadressenbits 26, 27 ≙ 01 übereinstimmen, während bei den Sektionen S4, S5, S6, S7, S8, eine um den Binärwert "1" verminderte Zeilenadresse für die nächst niedrigere Zeile j in Form des Splitting-Adressenbits SPADR ≙ 00 angegeben wird.

TABELLE II

| ADRALT | | | | | Splitting-Adressenbits für Sektion Si | | | | | |
|---|---|---|---|---|---|---|---|---|---|---|
| | | | | | S1 | S2 | S3 | S4 | S5 .... | S8 |
| 26 | 27 | 28 | 29 | 30 | 27 26 | 27 26 | 27 26 | 27 26 | 27 26 | 27 26 |
| 0 | 0 | 0 | 0 | 0 | 0 0 | x x | x x | x x | x x | x x |
| 0 | 0 | 0 | 0 | 1 | 0 0 | 0 0 | x x | x x | x x | x x |
| 0 | 0 | 0 | 1 | 0 | 0 0 | 0 0 | 0 0 | x x | x x | x x |
| 0 | 0 | 0 | 1 | 1 | 0 0 | 0 0 | 0 0 | 0 0 | x x | x x |
| 0 | 0 | 1 | 0 | 0 | 0 0 | 0 0 | 0 0 | 0 0 | 0 0 | x x |
| 0 | 0 | 1 | 0 | 1 | 0 0 | 0 0 | 0 0 | 0 0 | 0 0 | x x |
| 0 | 0 | 1 | 1 | 0 | 0 0 | 0 0 | 0 0 | 0 0 | 0 0 | x x |
| 0 | 0 | 1 | 1 | 1 | 0 0 | 0 0 | 0 0 | 0 0 | 0 0 | 0 0 |
| 0 | 1 | 0 | 0 | 0 | 0 1 | 0 0 | 0 0 | 0 0 | 0 0 | 0 0 |
| 0 | 1 | 0 | 0 | 1 | 0 1 | 0 1 | 0 0 | 0 0 | 0 0 | 0 0 |
| 0 | 1 | 0 | 1 | 0 | 0 1 | 0 1 | 0 1 | 0 0 | 0 0 | 0 0 |
| 0 | 1 | 0 | 1 | 1 | 0 1 | 0 1 | 0 1 | 0 1 | 0 0 | 0 0 |
| 0 | 1 | 1 | 0 | 0 | 0 1 | 0 1 | 0 1 | 0 1 | 0 1 | 0 0 |
| . | | | | | | | | | | |
| . | | | | | | | | | | |
| . | | | | | | | | | | |
| 1 | 1 | 1 | 1 | 0 | 1 1 | 1 1 | 1 1 | 1 1 | 1 1 | 1 0 |
| 1 | 1 | 1 | 1 | 1 | 1 1 | 1 1 | 1 1 | 1 1 | 1 1 | 1 1 |

Die mit x bezeichneten Ergebnisse in Tab I bzw. II der Splittingadressen-Generierungseinrichtungen sind irrelevant und haben den Wert 0 bzw. 1.

Eine Schaltungsanordnung zur Generierung der Splitting-Adressenbits SPADR ist in FIG 4 dargestellt. Sie besteht aus $2^n$, z.B. $2^3 = 8$ Splitting-Adressengenerierungseinrichtungen SAE1...SAE8, die jeweils einer von insgesamt $2^n$ Sektionen, das heißt jeweils einer von insgesamt 8 Sektionen S1...S8 zugeordnet sind. Jede Splitting-Adressengenerierungseinrichtung SAE1...SAE8 weist erste Eingänge E1 und zweite Eingänge E2 auf. Die ersten Eingänge E1 aller Splitting-Adressen Generierungseinrichtungen SAE1...SAE8 sind für die $z = m + n$ Adressenbits der alten Adresse ADRALT bestimmt, während die jeweils zweiten Eingänge E2 für jeweils n Bits unterschiedlicher Splitting-Sektionsparameter SSP vorgesehen sind. Diese Splitting-Sektionsparameter SSP sind für links- und rechtsausgerichtete Speicherdaten unterschiedlich. Für links ausgerichtete Speicherdaten hat der Splitting-Sektionsparameter SSP für die Sektion 1 den Wert $2^n - 1$ und erreicht bei jeweils stufenweiser Reduzierung um den Binärwert "1" in den folgenden Sektionen schließlich in der $2^n$-ten Sektion den Wert "0". Im gezeigten Beispiel mit $2^3 = 8$ Sektionen haben die n Bits des Splitting-Sektionsparameters SP für die Sektion S1 den Wert 111 ≙ 7, für die Sektion S2 den Wert 110 ≙ 6 usw. und schließlich für die Sektion S8 den Wert 000 ≙ 0. Für rechts ausgerichtete Speicherdaten gelten die gleichen Splitting-Sektionsparameter SSP in umgekehrter Reihenfolge. Die für links- bzw. rechts ausgerichtete Speicherdaten jeweils spezifische Zuschaltung der entsprechenden Splitting-Sektionsparameter an die einzelnen Splitting-Adressengenerierungseinrichtungen SAE1...SAE8 erfolgt über Wechselschalter, vorzugsweise Multiplexer MUX, deren Steuersi-

gnal L/R die Betriebsart der nachfolgenden Splitting-Adressengenerierungseinrichtungen SAE1...SAE8 in der Weise steuern, daß bei links ausgerichteten Speicherdaten eine Addition und bei rechts ausgerichteten Speicherdaten eine Subtraktion der Splitting-Sektionsparameter SSP zur bzw. von der alten Adresse ADRALT erfolgt. Unter Bezugnahme auf FIG 2 und Tabelle I ergibt sich zum Beispiel bei der alten Adresse ADRALT = 00010 für die Sektionen S2 und S3 folgende Rechnung:

S2: ADRALT $\underline{00}$010 + SSP 110 = SPADR $\underline{01}$000
S3: ADRALT $\underline{00}$010 + SSP 101 = SPADR $\underline{00}$111

Während in der Sektion S3 Zeilen- und Splittingadressenbits identisch sind, ergibt sich für die Sektion S2 eine Änderung der Splitting-Adressenbits 26, 27 gegenüber den Zeilenadressenbits 26, 27 der alten Adresse ADRALT, weil die zugehörigen Daten bereits in der nächsten Zeile sind.

Als Splitting-Adressengenerierungseinrichtungen werden vorzugsweise Addier-/Subtrahierwerke verwendet, wobei insbesondere schnelle Verknüpfungsnetzwerke mit einer vorausschauenden Übertrag-Entscheidungslogik in Betracht kommen. Am Ausgang der einzelnen Addier-/Subtrahierwerke liegen die jeweils sektionsspezifischen Splitting-Adressenbits SPADR an, die in Abhängigkeit von der alten Adresse zum Teil den ursprünglichen Zeilenadreßbits 26, 27 entsprechen zum Teil aber in obengenannter Weise modifiziert werden. Die Beziehungen zwischen alter Adresse ADRALT und den für die einzelnen Sektionen maßgeblichen Splitting-Adressenbits SPADR sind den Tabellen I und II entnehmbar. Die Schaltungsanordnung nach FiG 4 hat insbesondere folgende Merkmale:
- Laufzeitsparende Logikanordnung durch Parallelverarbeitung;
- Symmetrische Aufbauweise und Gleichartigkeit der Schaltungen für jede Sektion;
- Keine Rückkopplungen zwischen den den einzelnen Sektionen zugeordneten Schaltungskomplexen;
- Die Anzahl der Sektionen innerhalb einer Datenbank ist nicht auf das beschriebene Beispiel beschränkt. Sie kann kleiner (4,2) und größer (16, 32....) sein, wobei die vorstehenden Vorteile unverändert erhalten bleiben.

## Patentansprüche

1. Schaltungsanordnung zur Generierung von Splittingadressen für einen aus einer oder mehreren Bänken bestehenden Speicher, bei dem einzelne Datenblöcke in jeweils $2^m$ aufeinanderfolgenden Zeilen abspeicherbar sind, wobei jede Zeile in $2^n$ unabhängig voneinander adressierbare Sektionen unterteilbar ist und eine Adressierung innerhalb eines Datenblocks für einen der Breite einer Bank bzw. der Länge einer vollen Zeile entsprechenden Speicherraum an irgendeiner beliebigen Sektion beginnend möglich ist, so daß bei Überschreitung der Zeilengrenze gleichzeitig auf versetzte Speicherräume in zwei konsekutiven Zeilen zugegriffen wird, die durch die für die einzelnen Sektionen ermittelten Splittingadressen gekennzeichnet sind, dadurch gekennzeichnet, daß für jede der $2^n$ Sektionen je eine Splitting-Adressengenerierungseinrichtung (SAE1...SAE8) mit jeweils ersten Eingängen (E1) für z = m + n Bits der alten Adresse (ADRALT) und jeweils zweiten Eingängen (E2) für jeweils n Bits unterschiedlicher Splitting-Sektionsparameter (SSP) vorgesehen ist, daß die Splitting-Sektionsparameter (SSP) für links bzw. rechts ausgerichtete Speicherdaten, beginnend mit der ersten Sektion, den Binärwert $2^n-1$ bzw. 0 und in den folgenden Sektionen bei stufenweiser Änderung um den Binärwert "1" nach unten bzw. oben in der $2^n$-ten Sektion den Binärwert "0" bzw. $2^n-1$ aufweisen, daß die für links bzw. rechts ausgerichtete Speicherdaten jeweils spezifische Zuschaltung der entsprechenden Splitting-Sektionsparameter (SSP) an die jeweiligen Splitting-Adressengenerierungseinrichtung (SAE1...SAE8) über Wechselschalter erfolgt, deren Steuersignal die Betriebsart der nachfolgenden Splitting-Adressengenerierungseinrichtungen in der Weise steuern, daß bei links ausgerichteten Speicherdaten eine Addition und bei rechts ausgerichteten Speicherdaten eine Subtraktion der Splitting-Sektionsparameter zur bzw. von der alten Adresse (ADRALT) erfolgt.

2. Schaltungsanodnung nach Anspruch 1, dadurch gekennzeichnet, daß die Wechselschalter als Multiplexer (MUX) ausgebildet sind.

3. Schaltungsanordnung nach Anspruch 1 oder 2, dadurch gekennzeichnet, daß die Splitting-Adressengenerierungseinrichtungen (SAE1...SAE8) aus Addier-/Subtrahiereinrichtungen mit einer vorausschauenden Übertrags-Entscheidungslogik bestehen.

## Claims

1. Circuit arrangement for generating split addresses for a memory consisting of one or more banks in which individual data blocks can be stored in each case $2^m$ successive rows, each row being subdividable in $2^n$ sections which can be addressed independently of one another and an addressing is possible within one data block for a storage space corresponding to the width of one bank or to the length of one full row, beginning at any arbitrary section, so that when the row limit is exceeded, offset storage spaces in two consecutive rows are simultaneously accessed which are identified by the split addresses determined for the individual sections, characterized in that for each of the $2^n$ sections one split-address generating device (SAE1...SAE8) is provided, having in each case first inputs (E1) for z=m+n bits of the old address (ADRALT) and in each case second inputs (E2) for in each case n bits of different split-section parameters (SSP), in that the split-section parameters (SSP) for left- or right-justified memory data, beginning with the first section, exhibit the binary value $2^n-1$ or zero and in the following sections, with a step-by-step change by the binary value "1" towards the bottom or towards the top and the $2^n$ th section exhibit the binary value "0" or $2^n-1$, in that the addition, which is in each case specific for left- or right-justified memory data, of the corresponding split-section parameters (SSP) is effected at the respective split-address generating device (SAE1...SAE8) via change-over switches the control signal of which controls the operating mode of the subsequent split-address generating devices in such a manner that the split-section parameters are added in a case of left-justified memory data and are subtracted in the case of right-justified memory data to and from the old address (ADRALT) respectively.

2. Circuit arrangement according to Claim 1, characterized in that the change-over switches are constructed as multiplexers (MUX).

3. Circuit arrangement according to Claim 1 or 2, characterized in that the split-address generating devices (SAE1...SAE8) consists of adding/subtracting devices having a predictive carry decision logic.

**Revendications**

1. Montage pour produire des adresses de subdivision pour une mémoire qui est constituée par un ou plusieurs blocs et dans laquelle différents blocs de données peuvent être mémorisés sur respectivement $2^m$ lignes successives, et dans laquelle chaque ligne peut être subdivisée en $2^n$ sections adressables indépendamment les unes des autres, et un adressage à l'intérieur d'un bloc de données, pour une zone de mémoire correspondant à la largeur d'un bloc ou à la longueur d'une ligne complète, est possible en commençant dans n'importe quelle section, de sorte que, lors du dépassement de la limite d'une ligne, un accès est réalisé simultanément à des zones de mémoire décalées dans deux lignes consécutives qui sont caractérisées par les adresses de subdivision déterminées pour les différentes sections, caractérisé par le fait que pour chacune des $2^n$ sections, il est prévu respectivement un dispositif (SAE1...SAE8) de production d'adresses de subdivision comportant respectivement des premières entrées (E1) pour $z = m + n$ bits de l'ancienne adresse (ADRALT) et respectivement des secondes entrées (E2) pour respectivement n bits de différents paramètres (SSP) des sections de subdivision, que les paramètres (SSP) des sections de subdivision pour des données de mémoire alignées à droite ou à gauche possèdent, en commençant par la première section, la valeur binaire $2^n-1$ ou 0 et, dans les sections suivantes, dans le cas d'une modification échelonnée de la valeur binaire "1" vers le bas ou vers le haut dans la $2^n$-ème section, la valeur binaire "0" ou $2^n-1$, que l'envoi additionnel, respectivement spécifique pour des données de mémoire alignées à gauche ou à droite, des paramètres correspondant (SSP) des sections de subdivision au dispositif respectif (SAE1...SAE8) de production d'adresses de subdivision s'effectue par l'intermédiaire d'un commutateur inverseur dont le signal de commande commande le mode de fonctionnement des dispositifs de production d'adresses de subdivision, situés en aval, de telle sorte qu'une addition des paramètres des sections de subdivision à l'ancienne adresse (ADRALT) est réalisée dans le cas de données de mémoire alignées à gauche et une soustraction de ces paramètres, de ladite adresse est réalisée dans le cas de données de mémoire alignées à droite.

2. Montage suivant la revendication 1, caractérisé par le fait que les commutateurs inverseurs sont agencés sous la forme de multiplexeurs (MUX).

3. Montage suivant la revendication 1 ou 2, caractérisé par le fait que les dispositifs (SAE1...SAE8) de production d'adresses de subdivision sont constitués par des dispositifs additionneurs/soustracteurs comportant une logique prédictive de décision de transfert.

# FIG 1

# FIG 2

# FIG 3

EP 0 217 232 B1

# FIG 4